# EUROPÄISCHE PATENTSCHRIFT

(11) **EP 0 734 522 B1**
(45) Veröffentlichungstag und Bekanntmachung des Hinweises auf die Patenterteilung: **14.05.1997**
(21) Anmeldenummer: 95900757.6
(22) Anmeldetag: 17.11.1994
(51) Int. Cl.: G01N 27/90

(54) **SPULENEINHEIT**
A COIL UNIT
BOBINE

(30) Priorität: 14.12.1993 DE 4342602
(43) Veröffentlichungstag der Anmeldung: 02.10.1996
(73) Patentinhaber: PRÜFTECHNIK DIETER BUSCH AG, 85737 Ismaning (DE)
(72) Erfinder: SCHRÖDER, Bernd, D-80801 München (DE)
(74) Vertreter: Hieke, Kurt
(86) Internationale Anmeldenummer: EP9403811
(87) Internationale Veröffentlichungsnummer: WO9516912

(56) Entgegenhaltungen:
- EP-A- 0 493 003
- WO-A-93/09428
- DE-A- 3 910 535

## Beschreibung

Die Erfindung bezieht sich auf eine Meßspuleneinheit gemäß dem Oberbegriff des Patentanspruchs 1.

Für den bestimmungsgemäßen Betrieb einer solchen Meßspuleneinheit ist häufig die genaue Kenntnis der hierfür wichtigen Kenndaten, z.B. der Impedanzen, der Wirkbreiten (spacing), der optimalen Prüffrequenz, des zulässigen Frequenzbereichs, des Frequenzganges, des Spulentyps, der Bauform, der Seriennummer, des Herstellungsdatums u.s.w., erforderlich. Bisher wurden diese Kenndaten in einem Datenblatt vermerkt, das dem jeweiligen Bauelement beigegeben wurde. Auch ist etwa aus der DE-A-3 910 535 bekannt, Spulenkenndaten in einem externen Auschlußgerät in einem maschinen lesbaren Speicher einzuschreiben. Die Angabe der Kenndaten in einem von der Meßspuleneinheit gesonderten Datenblatt oder Speicher hat den Nachteil, daß sich dieses häufig an einer ganz anderen Stelle befindet als die Meßspuleneinheit, wenn der Benutzer die Kenndaten zum Arbeiten mit der Meßspuleneinheit gerade benötigt, und daß das Datenblatt verlegbar oder gar verlierbar ist. Letzteres ist speziell bei Meßspuleneinheiten sehr nachteilig, die individuell im Herstellungsbetrieb vermessen worden sind und sich hinsichtlich der festgestellten Daten von den Daten entsprechender anderer Meßspuleneinheiten mehr oder minder unterscheiden, wie dies z.B. bei Meßspulen für Präzisionsmessungen der Fall ist, so daß es beim Verlust des Datenblattes nötig ist, die Meßspuleneinheiten erneut präzise zu vermessen, wofür beim Benutzer oft die hierzu erforderlichen Präzisions-Meßinstrumente nicht vorhanden sind.

Hinzu kommt, daß bei einem umfangreichen Datensatz das Auffinden einer bestimmten, gerade interessierenden Information aus dem Datenblatt oft einen lästigen, zeitraubenden Vorgang darstellt, und die in dem Datenblatt enthaltenen Informationen nicht für eine unmittelbare Eingabe in eine Datenverarbeitungseinrichtung zur Verfügung stehen, sondern nach dem Aufsuchen im Datenblatt erst gesondert manuell in die EDV eingegeben werden müssen.

Der Erfindung liegt die Aufgabe zugrunde, besagte Meßspuleneinheiten so zu gestalten, daß ihnen ihre Kenndaten unverlierbar integral in einer solchen Form beigegeben werden können, daß die Kenndaten im Bedarfsfalle rasch feststellbar und zu einer nötigen Verarbeitung direkt in eine elektronische Datenverarbeitungseinrichtung eingebbar sind.

Die vorgenannte Aufgabe wird durch den Gegenstand des Patentanspruchs 1 gelöst.

Bei der erfindungsgemäßen Meßspuleneinheiten sind die für den Betrieb wichtigen Kenndaten in einem mit der Meßspuleneinheit verbundenen elektronischen Datenspeicher speicherbar und können über die diesem an der Meßspuleneinheit ebenfalls fest zugeordnete Schnittstelle im Bedarfsfalle rasch mittels eines Computers, z. B. eines Taschencomputers, ausgelesen werden. Als Speicher eignet sich besonders gut ein PROM, E-PROM oder EE-PROM, da sich im allgemeinen die bei der anfänglichen Vermessung festgestellten Kenndaten der Meßspuleneinheit nicht ändern, so daß nach ihrer Eingabe in den Speicher dieser nur noch gelesen zu werden braucht. PROM's stehen ebenso wie die benötigten Schnittstellen auf dem Markt preiswert in kleinen Abmessungen zur Verfügung, so daß es keine Schwierigkeiten bereitet den Speicher und die Schnittstelle auch an einer Meßspuleneinheit verhältnismäßig kleiner Abmessungen anzubringen.

Die erfindungsgemäße Meßspuleneinheit eignet sich auch besonders gut zum raschen Erkennen von sich im Betrieb bei ihr möglicherweise einstellenden Fehlern, und zwar durch Vergleich der gespeicherten Spulendaten mit den bei einer späteren Vergleichsmessung ermittelten.

Die erfindungsgemäße Meßspuleneinheit ermöglicht es auch, schnell und auf einfache Weise eine sogenannte Plausibilitätsprüfung vorzunehmen, die erkennen läßt, ob im Falle eines möglichen Einsatzes von unterschiedlich dimensionierten Meßspuleneinheiten in Verbindung mit unterschiedlichen Meßobjekten bei einem Meßgerät, die für die durchzuführende Messung richtige Meßspuleneinheit z.B. bei der Wirbelstromprüfung von Rohren auf Risse die zu dem jeweiligen Rohrdurchmesser hinsichtlich ihrer lichten Weite passende Meßspuleneinheit, vorgesehen wurde. Hierfür werden die von der Spule ausgegebenen Meßdaten mit anhand der gespeicherten Spulendaten errechneten ungefähr zu erwartenden Meßdaten verglichen, was mit dem erfindungsgemäßen Bauelement und einem Computer programmgesteuert vollautomatisch möglich ist.

Die Unteransprüche betreffen bevorzugte Ausführungsformen der Meßspuleneinheit gemäß Patentanspruch 1.

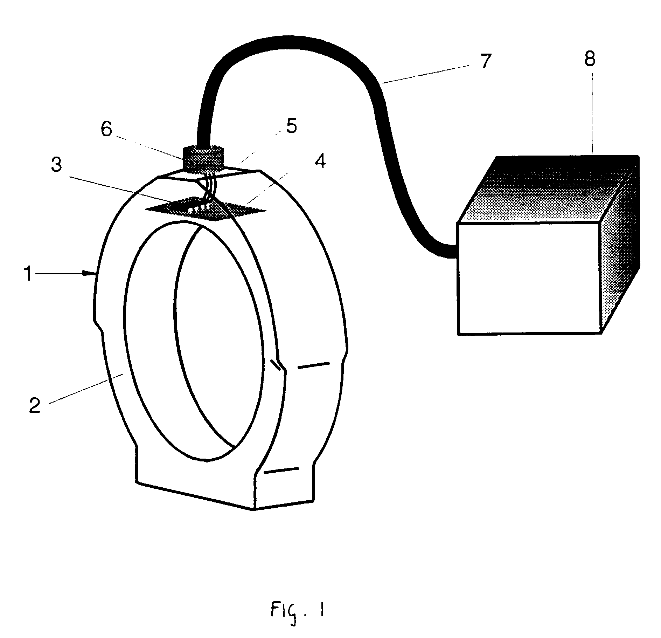

Die Zeichnung zeigt als Ausführungsbeispiel der Erfindung eine Meßspuleneinheit für die Wirbelströmprüfung schematisch in perspektivischer Darstellung.

In der einzigen Figur der Zeichnung bezeichnen:
- 1: die Meßspuleneinheit mit den in einem Gehäuse angeordneten, nicht dargestellten, ggf. mehreren Meßspulen,
- 2: das Gehäuse der Meßspuleneinheit 1,
- 3: den im Inneren des Gehäuses 2 angeordneten elektronischen Datenspeicher, der vorzugsweise als PROM, EPROM oder EEPROM ausgeführt ist,
- 4: eine den Datenspeicher 3 tragende, im Gehäuse 2 an dessen Wandung befestigte Leiterplatte, auf der ggf. auch eine benötigte Schnittstellenelektronik angeordnet ist,
- 5: Verbindungsleitungen, die von der Leiterplatte 4 her an zugehörige Buchsen einer in der Zeichnung nicht näher dargestellten, außen am Gehäuse 2 zugänglichen, mehrpoligen Steckdose angeschlossen sind, an die außerdem die nicht dargestellten Spulenanschlüsse geführt sind,
- 6: eine Überwurfmutter zum Sichern des Steckers eines zu einem Wirbelstromprüfgerät führenden Kabels in der Steckdose,
- 7: das Kabel, das einen nicht gesondert dargestellten Bus beinhaltet, der bei angeschlossenem Kabel mit den von den Verbindungsleitungen 5 belegten Buchsen der Steckdose verbunden ist,
- 8.: das Wirbelstromprüfgerät, das die elektronische Datenverarbeitungseinrichtung beinhaltet, an die der Datenspeicher 3 der Meßspuleneinheit 1 über die in diese eingebaute Schittstelle und den im Kabel 7 enthaltenen Bus anschließbar ist.

Bei dem dargestellten Ausführungsbeispiel ist die Schnittstelle als serielle Schnittstelle für den Anschluß eines 3-adrigen I²C-Busses ausgeführt, was daran erkenntlich gemacht ist, daß nur drei Verbindungsleitungen 5 von der Leiterplatte 4 zum Stecker führen. Es könnte aber prinzipiell auch eine parallele Schittstelle mit einem vieladrigen Bus vorgesehen werden. Anstelle im Inneren des Gehäuses 2 der Meßspuleneinheit 1 könnte der Datenspeicher 3 auch außen an dieser anderweitig geschützt und über eine passende Schnittstelle erreichbar angeordnet werden.

## Patentansprüche

1. Meßspuleneinheit für die Wirbelstromprüfung von metallischen Gegenständen, gekennzeichnet durch einen im oder am Gehäuse (2) der Meßspuleneinheit (3), das keinen Computer enthält, fest angebrachten elektronischen Datenspeicher (3), in dem die für den bestimmungsgemäßen betrieblichen Einsatz der Meßspuleneinheit (1) wichtigen Kenndaten von dieser, nämlich die Spulenimpedanzen, die Spulenwirkbreiten, die optimale Prüffrequenz, der zulässige Frequenzbereich, der Frequenzgang, der Spulentyp und die Bauform, abgespeichert sind, und durch eine dem Datenspeicher (3) an der Meßspuleneinheit (1) fest zugeordnete Schnittstelle sowie eine am Gehäuse (2) der Meßspuleneinheit (3) fest angebrachte Steckdose für besagte Schnittstelle und für die Spulenanschlüsse, um über ein einen Bus enthaltendes Kabel den Anschluß eines Computers (8) zum Lesen und/oder Verarbeiten des Inhalts des Datensspeichers (3) zu ermöglichen.

2. Meßspuleneinheit nach Anspruch 1, **dadurch gekennzeichnet,** daß der Datenspeicher (3) seriell beschreibbar und/oder auslesbar ist.

3. Meßspuleneinheit nach Anspruch 1 oder 2, **dadurch gekennzeichnet,** daß der Datenspeicher (3) einen PROM oder EPROM aufweist.

4. Meßspuleneinheit nach Anspruch 3, **dadurch gekennzeichnet,** daß der Datenspeicher (3) einen EEPROM aufweist.

5. Meßspuleneinheit nach einem der vorhergehenden Ansprüche, **dadurch gekennzeichnet,** daß die Schnittstelle seriell für den Anschluß eines I²C-Busses ausgeführt ist.

6. Meßspuleneneinheit nach Anspruch 5, **dadurch gekennzeichnet,** daß der I²C-Bus 3-adrig ist.

## Claims

1. Measuring coil unit for eddy current checking of metallic objects, characterised by an electronic data storage device (3), which is fixedly mounted in or at the housing (2) of the measuring coil unit (3), which does not contain a computer, and in which are stored the characteristic data, namely the coil impedance, coil effective range, optimum checking frequency, permissible frequency range, frequency characteristic, coil type and constructional type,of the measuring coil unit (1) and important for the intended operational use thereof, and by an interface, which is fixedly associated with the data storage device (3) at the measuring coil unit (1), as well as socket, which is fixedly mounted at the housing (2) of the measuring coil unit (3), for the said interface and for the coil connections, so as to enable the connection, by way of a cable containing bus, of a computer (8) for the reading and/or processing of the content of the data storage device (3).

2. Measuring coil unit according to claim 1 or 2, characterised thereby that the data storage device (3) can be written into and/or read out of serially.

3. Measuring coil unit according to claim 1 or 2, characterised thereby that the data storage device (3) comprises a PROM or an EPROM.

4. Measuring coil unit according to claim 3, characterised thereby that the data storage device (3) comprises an EEPROM.

5. Measuring coil unit according to one of the preceding claims, characterised thereby that the interface is executed serially for the connection of an I²C bus.

6. Measuring coil unit according to claim 5, characterised thereby that the I²C is 3 cored.

## Revendications

1. Unité de bobine de mesure pour le contrôle par courant de Foucault d'objets métalliques, caractérisée par une mémoire (3) de données électronique, qui est disposée à demeure dans ou sur le boîtier (2) de l'unité (3) de bobine de mesure ne comprenant pas d'ordinateur, dans laquelle sont mémorisées les données caractéristiques importantes lorsque l'on utilise l'unité (1) de bobine de mesure pour la faire fonctionner suivant les spécifications, à savoir les impédances de bobine, les largeurs utiles de bobine, la fréquence de contrôle optimale, la plage de fréquence admissible, la réponse en fréquence, le type de bobine et la forme de construction, et par une interface associée de manière fixe à la mémoire (3) de données sur l'unité (1) de bobine de mesure ainsi que par une prise disposée à demeure sur le boîtier (2) de l'unité (3) de bobine de mesure pour ladite interface et pour les bornes de la bobine, pour permettre de raccorder par l'intermédiaire d'un câble contenant un bus un ordinateur (8) de lecture et/ou de traitement du contenu de la mémoire (3) de données.

2. Unité de bobine de mesure suivant la revendication 1, **caractérisée en ce que** la mémoire (3) de données peut être écrite de manière sérielle et/ou peut être lue de manière sérielle.

3. Unité de bobine de mesure suivant la revendication 1 ou 2, **caractérisée en ce que** la mémoire (3) de données comporte une PROM ou EPROM.

4. Unité de bobine de mesure suivant la revendication 3, **caractérisée en ce que** la mémoire (3) de données comporte une EEPROM.

5. Unité de bobine de mesure suivant l'une des revendications précédentes, **caractérisée en ce que** l'interface est réalisée de manière sérielle pour le raccordement d'un bus I²C.

6. Unité de bobine de mesure suivant la revendication 5, **caractérisée en ce que** le bus I²C est à trois conducteurs.
